Europäisches Patentamt

European Patent Office

Office européen des brevets

(11) Publication number: **0 378 912**
**A2**

## (12) EUROPEAN PATENT APPLICATION

(21) Application number: **89312928.8**

(22) Date of filing: **11.12.89**

(51) Int. Cl.⁵: **H04N 1/44, H04N 1/00, B43M 3/02**

(30) Priority: **10.12.88 JP 312544/88**

(43) Date of publication of application:
**25.07.90 Bulletin 90/30**

(84) Designated Contracting States:
**AT BE CH DE ES FR GB GR IT LI LU NL SE**

(71) Applicant: **YANMAR DIESEL ENGINE CO. LIMITED**
**1-32, Chaya-machi Kita-ku**
**Osaka 550(JP)**

Applicant: **ISETO SHIKO CO. LTD.**
**44 Umezutakase-cho Ukyo-ku**
**Kyoto 615(JP)**

(72) Inventor: **Noma, Yasuo c/o Yanmar Diesel Engine Co., Ltd.**
**1-32 Chaya-machi Kita-ku**
**Osaka 550(JP)**
Inventor: **Ohnishi, Kiyoshi c/o Iseto Shiko Co. Ltd.**
**44 Umezutakase-cho Ukyo-ku**
**Kyoto 615(JP)**
Inventor: **Matsushima, Masaaki c/o Yanmar Diesel**
**Engine Co., Ltd.- 1-32 Chaya-machi Kita-ku**
**Osaka 550(JP)**
Inventor: **Nagase, Kazuaki c/o Yanmar Diesel Engine Co., Ltd**
**1-32 Chaya-machi Kita-ku**
**Osaka 550(JP)**

(74) Representative: **Barker, Rosemary Anne et al**
**c/o Mewburn Ellis, 2 Cursitor Street**
**London EC4 1BQ(GB)**

(54) **Sealing device for facsimile receiving paper.**

(57) Receiving paper (7) discharged from a facsimile receiver (2) is taken into the sealing device (1) by means of feed mechanism (8) and is transported, e.g. between plates (28, 29) and belts (22, 23), to first folding means (35, 36, 42,46) where it is folded in double and stacked in folded condition on a tray (43). The stacked paper is then folded again, along with envelope paper (52), by means of second folding means (56, 58, 59) which also seal the folded receiving paper (7) inside the folded envelope paper (52) by adhering the edges of the envelope paper.

FIG. 1

## SEALING DEVICE FOR FACSIMILE RECEIVING PAPER

This invention relates to a sealing device to secure confidentiality of facsimile receiving paper.

A device that seals receiving paper of documents sent by a facsimile apparatus to handle them as confidential documents has been widely known conventionally.

For example, in Japanese published Patent Specification No. 63-67072, a device which reads a discriminative pattern indicated on the leading part of receiving paper, switches transporting paths by distinguishing confidential documents from other documents and automatically receives in prepared envelopes is described.

On the other hand, in Japanese published Patent Specification No. 58-142664, a device which seals confidential documents by pasting them together in a stacked state so that the correspondence documents do not come out is disclosed.

In such conventional sealing devices, where confidential documents are received in envelopes, a very complicated mechanism is required in order to automatically initiate the operation to open envelopes and insert receiving paper, and therefore, it is a disadvantage when such a device tends to have problems such as omission of inserting into envelopes. In addition, as receiving paper discharged from a receiver is inserted into an envelope in the size as it is, a very large envelope is required, and the device itself comes to be large in size as well.

On the other hand, in a device which pastes the discharged documents from a receiver together as they are, there is an inconvenience that the documents may be see-through from the reverse, as thin paper is generally used for such receiving paper, and, in addition, it is a disadvantage of such device that the finished appearance is poor when receiving paper is pasted together in the discharged state.

Moreover, although the purpose of all the aforementioned conventional sealing devices is the same as that of the invention in preventing confidential documents from being read from outside, there have been some difficulties in connecting up such sealing devices to standard facsimile receivers. In this respect, it is essential that the receiving paper discharged from the facsimile receiver is securely passed into the sealing device, but, this point has not been sufficiently considered with regard to the conventional sealing devices and there has been considerable inconvenience in that the outlet of the receiver and the inlet of the sealing device tend to mutually dislocate while in use. Manufacture of a receiver and a sealing device in one unit may have been proposed but that does not tackle the problem of adapting existing facsimile receivers.

Furthermore, in the aforementioned conventional sealing devices, in cases where the lengths of the individual receiving papers are different, they have been folded conventionally as though the length of the receiving papers is all the same. However, when a short receiving paper is folded in the same manner as a long receiving paper, both sides of folded receiving paper widely dislocate in the direction of the length, i.e. the folded upper side surface is shorter. When subsequently received receiving paper is transported onto the previous receiving paper in a bias-folded state, it may stick to the folded upper edge of the preceding receiving paper so that it cannot be securely stacked.

It is an object of the invention to solve the disadvantages of conventional devices and to present an improved sealing device in which errors omitting insertion into an envelope are minimised, in which the entire structure is compact, and in which the finishing of the sealed envelope has a superior appearance by folding the receiving paper together with the envelope to seal.

According to the invention a sealing device for facsimile receiving paper comprises means for taking in receiving paper discharged from a facsimile receiver, first folding means for folding in double the receiving paper taken by the aforesaid means, second folding means for folding the receiving paper and envelope paper simultaneously in such a way that the aforementioned folded receiving paper is stacked with the envelope paper, and means for sealing the receiving paper by adhering the edges of the envelope paper.

More generally the invention provides an improved sealing device which can quickly seal the paper by a series of steps such as folding the receiving paper, folding it together with the envelope to seal, cutting, compression-bonding and adhering the edges.

In an advantageous development, the improved sealing device, when folding receiving paper exceeding a specified length, detects it and stops the steps of folding and sealing.

The invention will be described further, by way of example, with reference to the accompanying drawings, in which:

Fig. 1 is a schematic drawing showing the overall composition of a first embodiment of a sealing device of the invention;

Fig. 2 is a perspective view showing the external appearance of the device;

Fig. 3 is a side view of a feed-out mechanism of a facsimile receiver sealing device of the invention;

Fig. 4 is a perspective view of the feed-out mechanism shown in Fig. 3;

Fig. 5 is a front view of exemplary receiving paper;

Figs. 6 to 10 are schematic side views showing the operation of the receiving paper take-in and folding mechanisms of the device of Fig. 1;

Fig. 11 is a perspective view of envelope paper;

Fig. 12 is an enlarged fragmentary side view of the cam part for driving the folding blade in the device of Fig. 1;

Figs. 13 to 15 are schematic side views showing the operation of the folding and sealing mechanism of the device of Fig. 1;

Fig. 16 is a plan view of the compression roller part of the mechanism shown in Figs. 13 to 15;

Fig. 17 is a perspective view of an envelope sealed around receiving paper;

Fig. 18 is a block diagram of a control circuit for controlling the device of the invention;

Fig. 19 is a flowchart of Fig. 18;

Fig. 20 is a side sectional view of another embodiment of the device of the invention;

Fig. 21 is a front view of exemplary confidential documents;

Fig. 22 is a partial sectional view of the embodiment shown in Fig. 20;

Fig. 23 is a partial side view showing the region near the roller exit of the receiving paper folding guide;

Figs. 24 to 26 are partial side views showing the operation of the embodiment shown in Fig. 20;

Fig. 27 is a partial plan view of the mechanism shown in Figs. 24 to 26 in the region of the presser for receiving paper;

Fig. 28 is a partial underside view of the same presser region as in Fig. 27;

Fig. 29 is a front view of the same region as in Fig. 27;

Fig. 30 is a perspective view of envelope paper in a sealed state;

Fig. 31 is a flowchart relating to operation of receiving paper length sensors and middle length stoppers;

Fig. 32 is a flowchart relating to operation of an overlength sensor;

Fig. 33 is an enlarged side sectional view showing the driving part of an eccentric cam shaft;

Fig. 34 is a flowchart including the input control routine for receiving paper exceeding a specified length and the folding position control routine in Fig. 31 and Fig. 32;

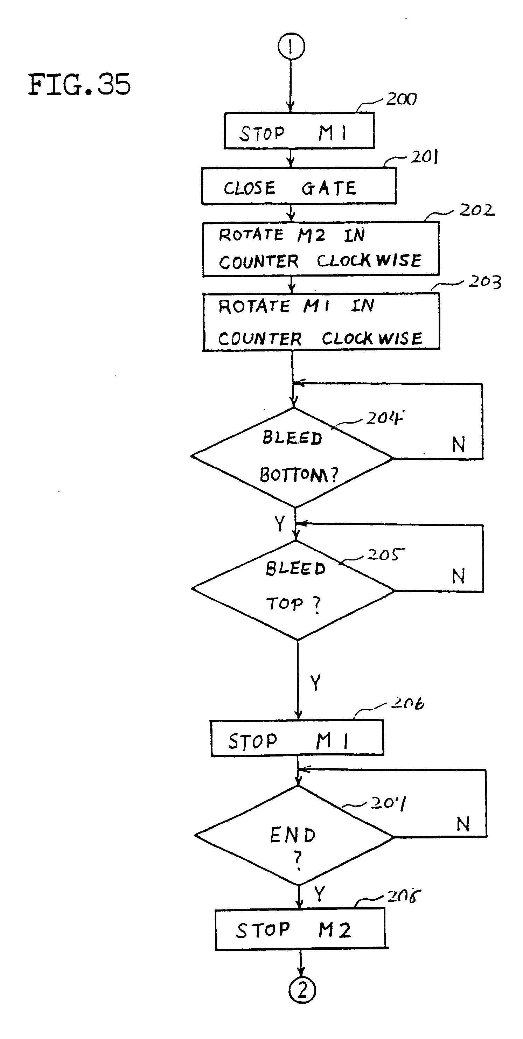

Fig. 35 is a flowchart showing the sequence from step 1 in Fig. 34;

Figs. 36 and 37 are side views showing the driving system in the embodiment shown in Fig. 20;

Fig. 38 is a plan view of the driving system shown in Figs. 36 and 37;

Fig. 39 is a schematic side view of the driving system for a take-in roller for envelope paper and for the sealing and folding rollers;

Figs. 40 to 44 are schematic side views showing the operation of the driving system in Fig. 39;

Fig. 45 is a front sectional view showing a sealing and folding roller and a blade;

Fig. 46 is a sectional detail showing the shape of an eccentric cam ring;

Figs. 47 and 48 are schematic details showing the press-inserting position of a blade in a device of the invention; and

Figs. 49 to 52 show unsatisfactory press-inserting positons as of a conventional blade.

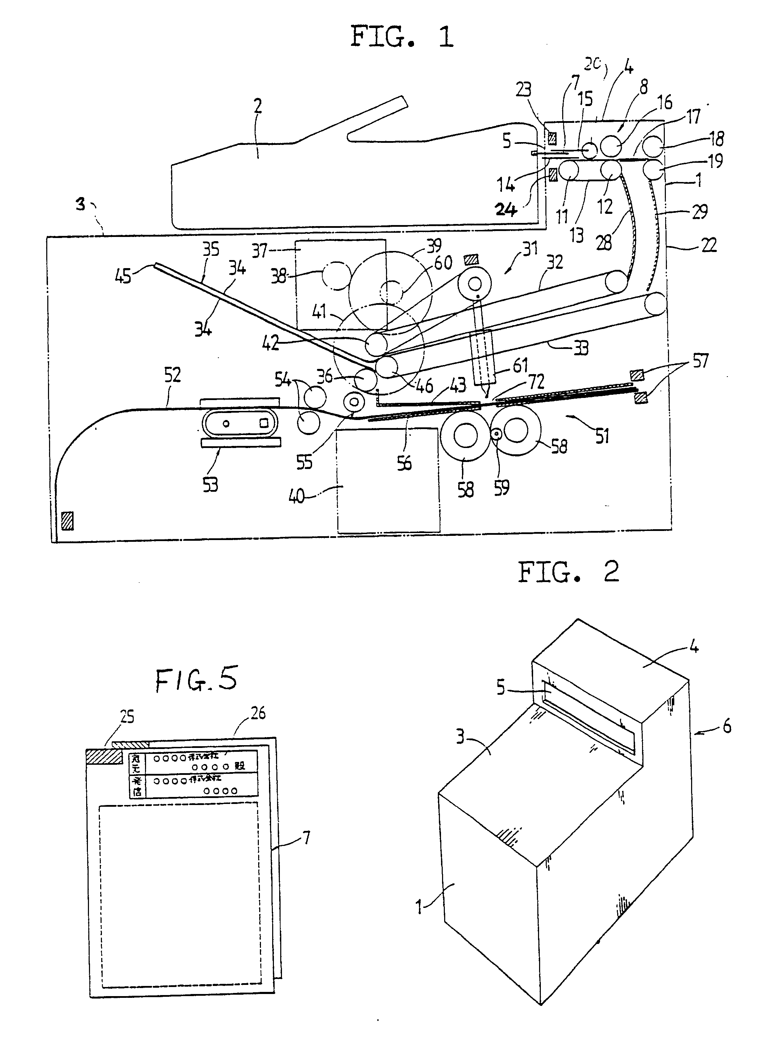

Fig. 2 shows the external appearance of one embodiment of a sealing device 1 of the invention wherein a housing 6 formed in a box shape has a raised part 4 at one end of its upper surface. The upper surface other than the raised part 4 provides a shelf part 3 on which a facsimile receiver 2 is mounted, and facing towards the shelf part 3, on the side surface of the raised part 4, there is an inlet aperture 5 for receiving paper.

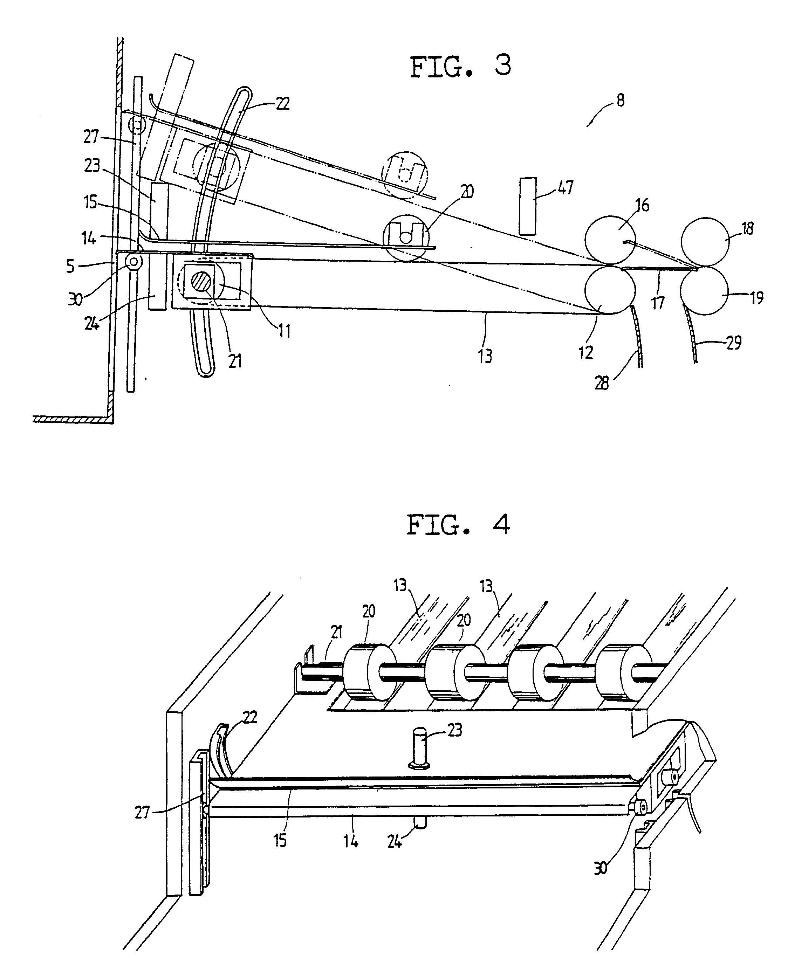

Fig. 1 shows the structure inside the box 6, wherein a feed-out mechanism 8 is disposed inside the inlet 5 in the raised part 4 to feed receiving paper 7 discharged from the receiver 2 in a rearward direction. As shown in Figs. 3 and 4, the feed-out mechanism 8 comprises a feed-out belt 13 wound between pairs, for example four pairs of belt rollers 11 and 12, a lower take-in guide plate 14 extending from the inlet 5 to the feed-out belt 13, an upper take-in guide plate 15 positioned at a spacing above the guide plate 14, a guide roller 16 resting on the rearward roller 12 which winds the belt 13, a switching gate 17 positioned rearward of the guide roller 16 to switch the feed-out direction according to whether the documents are confidential or general, and a pair of upper and lower feed-out rollers 18 and 19 which feed out only general documents. Above the middle part of the feed-out belt 13, a presser roller 20 which firmly holds the receiving paper 7 against the belt 13 is employed.

The belt roller 11 adjacent the inlet 5 is mounted on a shaft 21, and each end of the shaft 21 is inserted into a respective curved fixing guide 22 so that the belt roller 11 can roll upwards and downwards along the fixing guide 22 with the fulcrum at the centre of the rearward roller 12 (as shown in broken lines in Fig. 3). The shaft 21 can be fixed at any desired position by means such as screws. With the upward and downward swinging of the roller and the belt 13, the lower guide plate 14, the upper guide plate 15 and the presser roller 20 swing upward and downward at the same time.

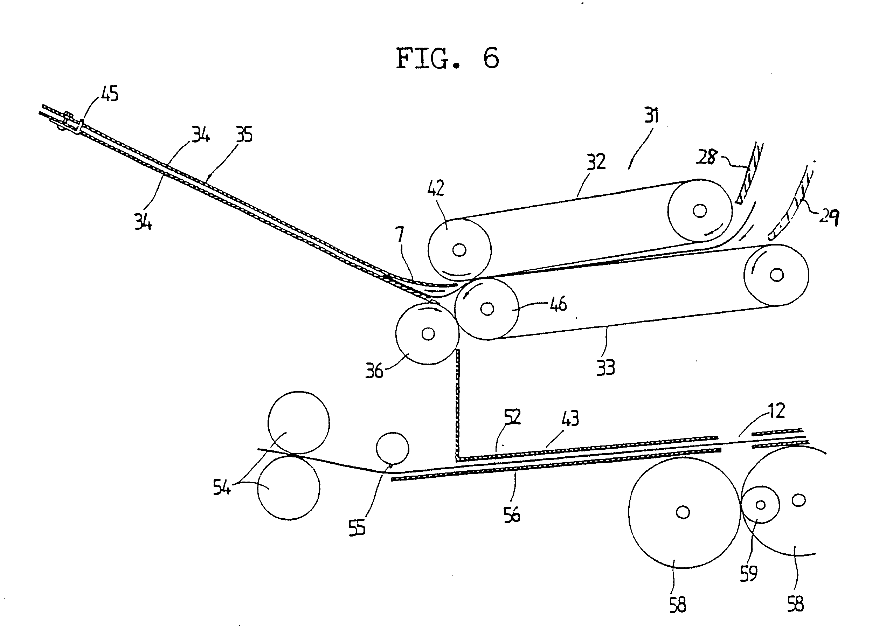

Above the upper guide plate 15 adjacent the inlet 5, there is a discriminative sensor 23 which discriminates whether the received document 7 is a confidential document or a general document. The discrimination of documents is performed, as shown in Fig. 5, by the sensor 23 detecting or reading a discriminative pattern 25 previously recorded at a corner of the leading part of the receiving paper 7 to distinguish whether it is a confidential document or a general document. For example, it may be that when the discriminative pattern 25 is recorded, it is a confidential document, and when it is not recorded, it is a general document.

Opposite to the discriminative sensor 23, below the lower guide plate 14, there is a document take-in sensor 24 which detects when the received document 7 is entering through the inlet 5.

On the leading part of the receiving paper 7 in the feed-out direction, a destination recorded column 26 to record the name of the receiver is employed.

A grooved vertical guide 27 is positioned at each side of the lower guide plate 14, as shown in Fig. 3, and respective ends of the sliding bar 30, which is fixed below the edge margin of the lower guide plate 14 adjacent the inlet 5, are inserted therein. When the end of the belt 13 is swung upward and downward as mentioned before, this sliding bar 30 moves linearly upward and downward so that the positioning of the end part of the lower guide plate 14 relative to the inlet 5 is maintained.

In the aforementioned structure, as shown in Fig. 1, the receiving paper 7 discharged from the facsimile receiver 2 enters into the inlet 5 and, passing between the upper and lower guide plates 14 and 15, is fed out on the feed-out belt 13. When the receiving paper 7 reaches the middle of the feed-out belt 13, the leading part of the receiving paper 7 passes between the presser roller 20 and the feed-out belt 13. Then it is further transported by the feed-out belt 13 and passes between the rear guide roller 16 and the belt roller 12.

In the case where the document distinguished by the discriminative sensor 23 is a general document, the switching gate 17 is in a horizontal state, and therefore, the receiving paper 7 passes across this gate 17 and between the rear send-out rollers 18 and 19 for discharge at the side of the box 6.

On the other hand, in the case where the document recorded on the receiving paper 7 is a confidential document, the end of the switching gate 17 adjacent the belt 13 swings upward (as shown in Fig. 3) and the receiving paper 7 is fed out downward from the point where it leaves the feed-out belt 13. When the receiving paper 7 is of rolled type, which is widely used, the leading end of the receiving paper 7 discharged from the receiver 2 tends to bend downward anyway so it is fed smoothly downward.

Between the rear roller 12 which winds the feed-out belt 13 and the guide rollers 18, 19 which discharge general documents, a pair of right and left transporting guides 28 and 29 are arranged which guide the receiving paper 7 downward, and the paper is fed downwards passing between the guides 28 and 29. These guides 28 and 29 are also curved to match the bending of the receiving paper 7 so that it is all the more smoothly fed downards. The receiving paper 7 which is fed downwards in this manner is fed to one end of a transporting and folding mechanism 31, which is provided below the lower ends of the transporting guides 28 and 29.

The transporting and folding mechanism 31 comprises, as shown in Fig. 1, a pair of upper and lower transporting belts 32 and 33 which extend obliquely downard from the exit end of the guide plates 28 and 29 and form the transportion path of the invention, a folding guide 35 composed of a pair of upper and lower plates 34 and 34 extending obliquely upward from the lower end of the transporting belts 32 and 33, and folding guide rollers 36, 42 and 46 positioned close to the exit end of the lower transporting belt 33. Above the lower end of the upper transporting belt 33, a first driving motor 37 is positioned, and its rotative power is transmitted from a pinion 38 on its drive shaft through an intermediate gear 39, an intermediate pinion 60 and a driven gear 41 to the lower end roller 42 of the upper transporting belt 32. The upper transporting belt 32 is disposed in such a manner that its end adjacent the guide plates 28 and 29 is higher in relation to the lower transporting belt 33 so that there is a wider spacing between the transporting belts 32, 33 at the entrance of the transportation path. Consequently, the receiving paper 7 fed between the two belts 32 and 33 has its leading edge pinched between the folding guide rollers 42, 46, which constitute the second transporting means, as it approaches the exit end of the belts 32 and 33. The resulting drawing force causes an unnecessary load to bear on the receiver 2 if the receiving paper 7 is drawn by these transporting belts 32, 33 without having been cut off by the receiver 2. Under the lower transorting belt 33, a receiver tray 43 bent in L shape is provided.

The operation of the transporting and folding mechanism 31 is now described with reference to Fig. 6.

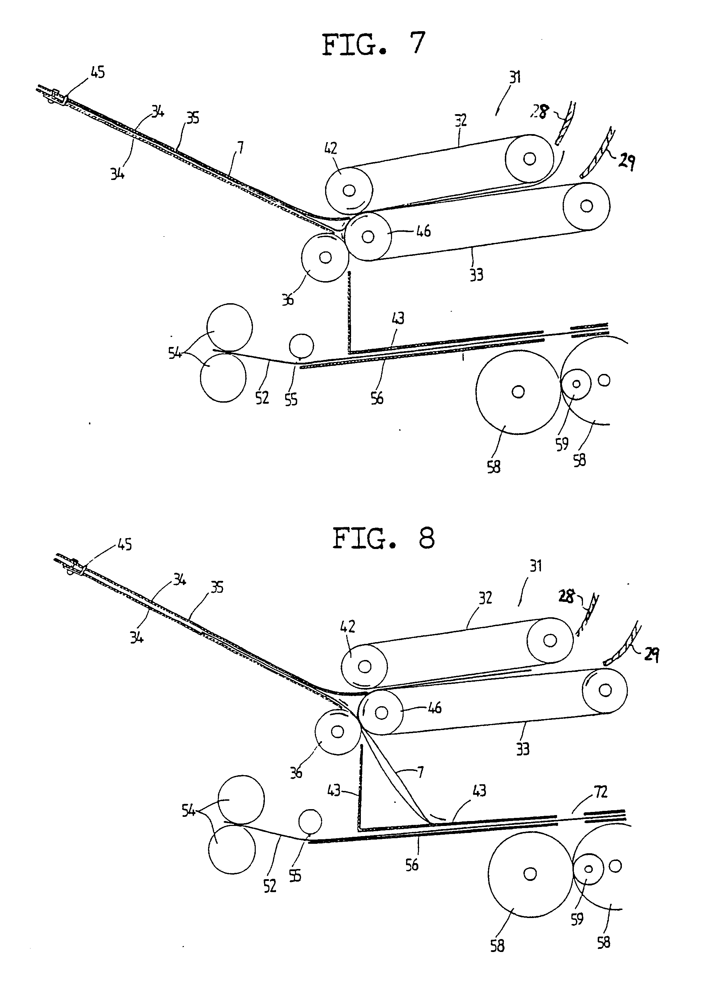

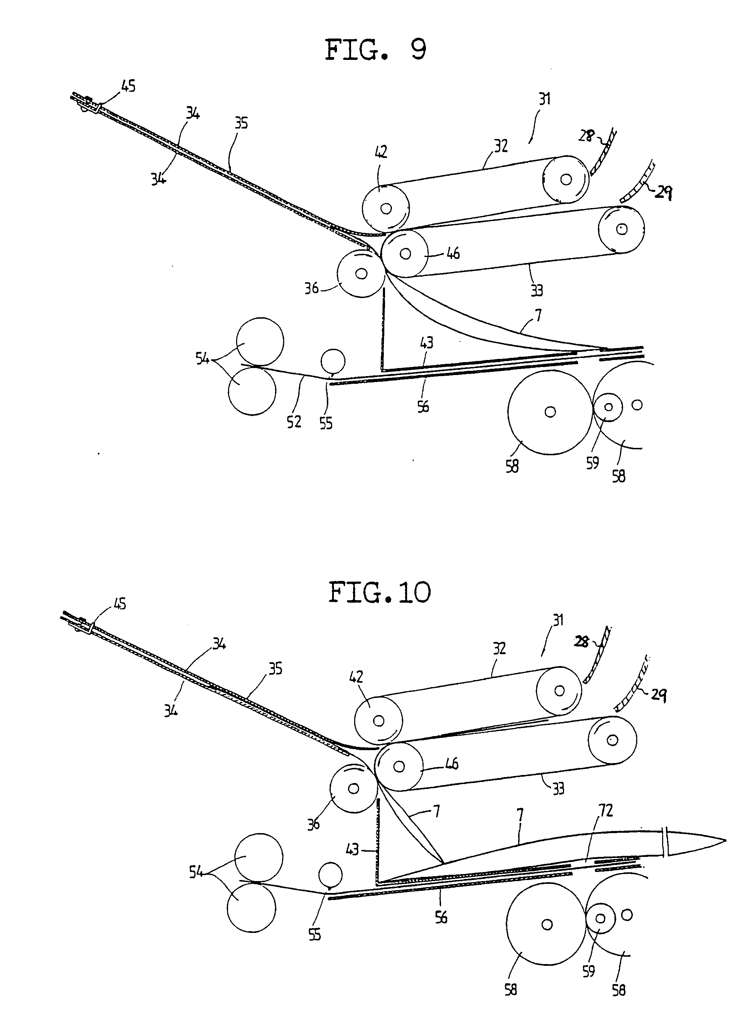

First, the receiving paper 7 fed downwards between the guide plates 28 and 29 enters between the upper and lower transporting belts 32 and 33. Then, as the leading edge of the receiving paper 7 approaches the exit end between the two belts 32 and 33, it is pinched and drawn by the folding guide rollers 42, 46, and fed out, as shown in Fig. 6, into a slit between the plates 34 and 34 of the folding guide 35. At the upper end of the folding guide 35, a stop 45 is mounted, and when the leading edge of the receiving paper 7 contacts the stop 45, as shown in Fig. 7, the receiving paper 7 protruding downward at the entrance end of the folding guide 35, adjacent the folding guide rollers 42, 46, becomes slack. As this slackness is created along the direction of the curving tendency of the receiving paper 7, as previously mentioned, it is a smooth action. As the paper 7 continues to be fed out by the folding guide rollers 42, 46, the leading part joining into the slackened part is caused to pass between the folding guide rollers 36, 46 at the exit end of the lower transporting belt 33 and is fed downwards by these rollers 36, 46 onto the receiver tray 43 (Figs. 8 and 9). As placed on the tray 43, the receiving paper 7 has the recorded surface of the document on its lower side.

Consecutive sheets of receiving paper 7 cut by the receiver 2 are folded and stacked on the receiver tray 43 in this way (Fig. 10). The transporting and folding of the receiving paper 7 is terminated when the document take-in sensor 24 (Figs. 1 and 3) detects the termination of reception. The detection of the termination of reception by the document take-in sensor 24 is performed by measuring the time from the moment that the final receiving paper 7 fed out from the receiver 2 passes the document take-in sensor 24 and confirming that no succeeding receiving paper 7 is coming in after a specified time. As shown in Fig. 3, a paper length sensor 47 is employed in the feed-out mechanism 8 in front of the rear guide roller 16 of the feed-out belt 13. When the position of the leading edge of the receiving paper 7 is detected by this paper length sensor 47, the document take-in sensor 24 determines the presence or absence of paper. If, at this stage, the presence of paper is not indicated by the sensor 24, the length of the paper must be shorter than the specified length. In this case, since action by the drawing and folding mechanism 31 is impossible, the discriminative gate 17 is put to its downward position to discharge the paper as a general document.

The receiving paper 7 stacked on the receiver tray 43 is sealed by the folding and sealing mechanism 51, which will now be described.

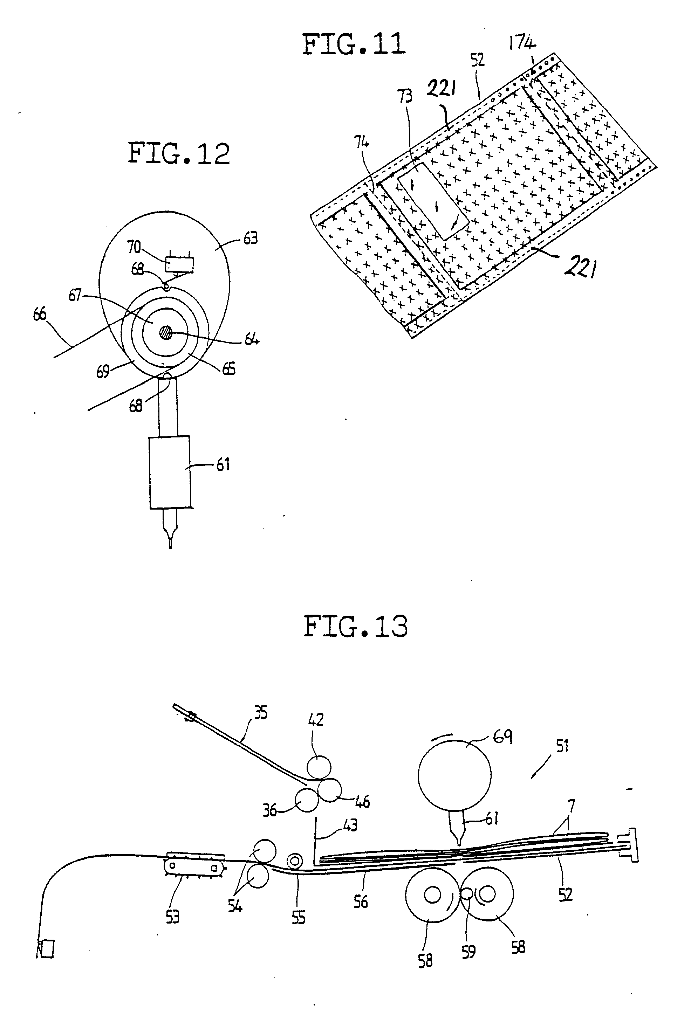

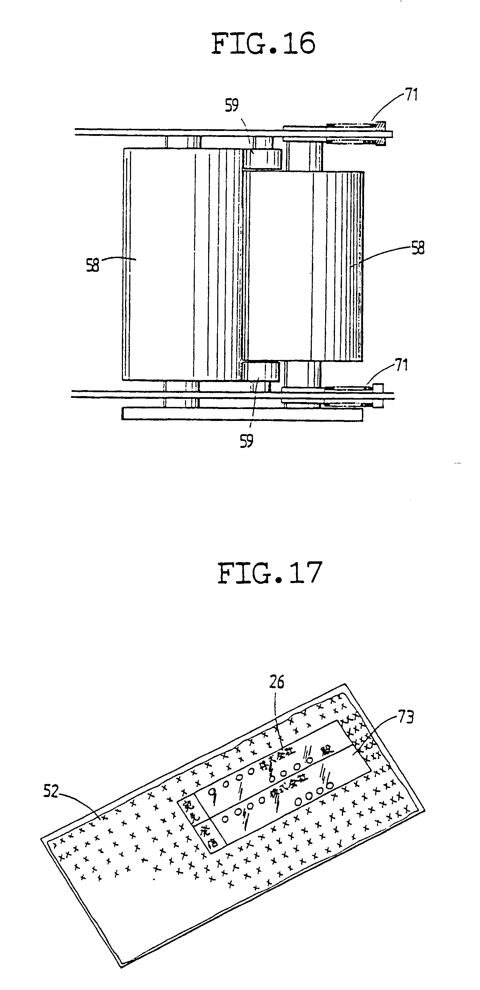

As shown in Fig. 11, a continuous web with a number of holes in both deckle edges is used as envelope paper 52 to enclose and seal the receiving paper 7. The envelope paper 52 is fed to the side of the receiver tray 43 from beneath the folding guide 35 by a known traction feeder 53 (Figs. 1 and 13) driven by a further motor 40. As shown in Fig. 13, in front of the feeder 53, a pair of upper and lower feed-out guide rollers 54 and 54 are employed to pinch the envelope paper 52, and in the front of these a knife 55 is positioned to cut the envelope paper. The envelope paper 52 fed out by the guide rollers 54 passes beneath the knife 55 and is fed forward between a guide plate 56, positioned below the receiver tray 43, and the receiver tray 43 itself. At the front of the guide plate 56, an envelope paper waiting sensor 57 senses that the leading end of the envelope paper 52 has reached this point whereupon feeding of the envelope paper 52 is stopped. Between the knife 55 and the envelope paper waiting sensor 57, edge compression bond rollers 58 and 58 are disposed below the guide plate 56, and, as shown in Fig. 16, on each side of one of these compression bond rollers 58, a respective deckle edge compression bond roller 59 is employed.

The term deckle edge refers to the margins 221 at boths ends when the envelope paper is folded (see Fig. 11).

These compression bond rollers 58 and 59, the guide rollers 54 (Fig. 13) and the traction feeder 53 are, as shown in Fig. 1, driven by the second motor 40.

Above the receiver tray 43, and in alignment with the compression bond rollers 58 and 59, the folding blade 61 is positioned pointing in a downward direction. As shown in Fig. 12, above the blade 61, a cam 63 which moves the blade 61 upward and downward is supported by a shaft 64. A drive belt 66 links a belt pulley 65 attached to the shaft 64 of the cam 63 and the roller 42 at the exit end of the upper drawing belt 32 of the drawing and folding mechanism 31. The cam shaft 64 is thus rotated by the first motor 37 through the belt 66, between the cam shaft 64 and the cam 63. However, a one-way clutch 67 is provided which transmits power in one direction only, so when the motor 37 rotates clockwise, its motive force is not transmitted to the cam 63, but when the motor 37 rotates counterclockwise, the cam 63 rotates in that direction.

Mounted on the cam shaft 64, there is a slit plate 69 formed with a groove 68 at two places on its outer circumference. The slit 69 plate is also driven by way of the aforementioned one-way clutch 67, and when the connecting part of a limit switch 70 falls into one of the grooves 68 and 68, the limit switch 70 is actuated to stop the counterclockwise operation of the motor 37. In this embodiment, since the grooves 68 and 68 are formed with a spacing of 180° on the circumference of the slit plate 69, every time the slit plate 69, or the cam 63 rotates half way around, the counterclockwise movement of the motor 37 stops.

In operation of the folding and sealing mechanism 51, when termination of the discharge of received documents is detected by the document take-in sensor 24, the first motor 37 stops clockwise driving when the final receiving paper 7 is stacked on the receiver tray 43. Then, by driving the motor 37 counterclockwise, the cam 63 is rotated by the action of the one-way clutch 67. The blade 61 is thus lowered and the receiving paper 7 and the envelope paper 52 are pushed out downward and thereby doubled over as they are pushed through a gap 72 formed in the receiver tray 43 and the guide plate 56. In this step, the envelope 52 is slackened under the knife 55.

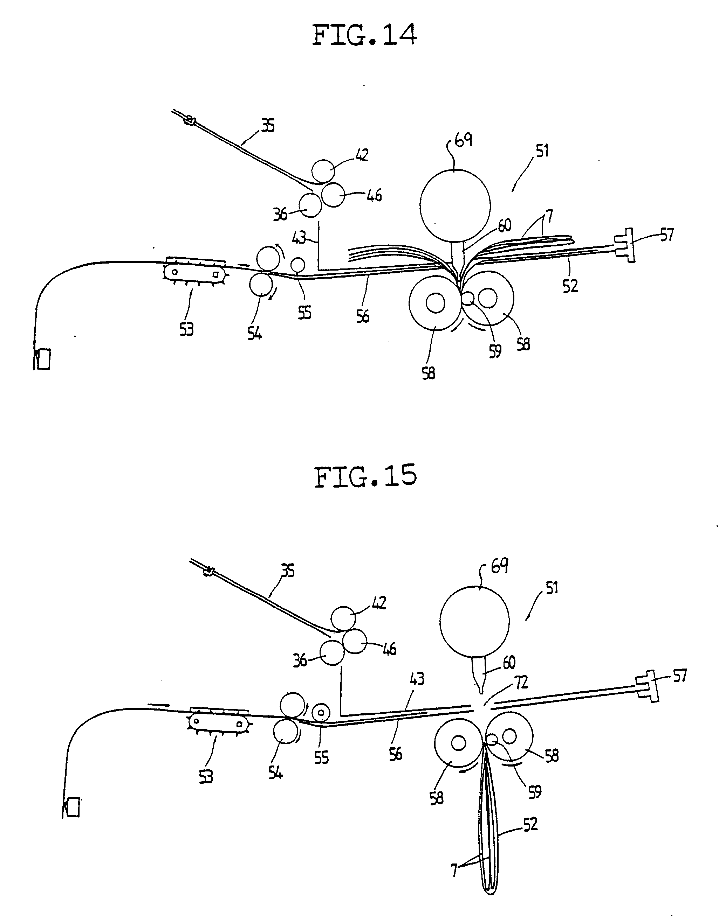

As shown in Fig. 14, before the leading end of the folded part of the envelope paper 52 is put between the compression bond rollers 58 and 59, the motor 40 is driven, and the compression bond rollers 58 and 59 and the envelope paper feed-out roller 54 rotate. Since the peripheral speed of the compression bond rollers 58 and 59 is higher than that of the envelope paper feed-out roller 54, a tension is created and as a perforated line 74 is previously formed in the envelope paper 52, as shown in Fig. 11, it is easily cut by the knife 55 along this line while under this tension.

On the envelope paper 52, a pressure sensitive adhesive has been previously applied around the margins 221 at the leading edge and both deckle edges, and by the pressure of these compression bond rollers 58 and 59, the envelope is discharged downward, as shown in Fig. 15, with the three edges adhered and the receiving paper 7 enclosed and sealed inside. As shown in Fig. 16, one of the pair of rollers 58 and 58 which compression-bond the leading end of the envelope paper 52 to the rear margin thereof is urged towards the other by a spring 71 so when the number of the received documents 7 is large, it can retreat to allow for this.

As shown in Figs. 11 and 17, a transparent window 73 is formed in a part of the envelope paper 52, and the record printed on the destination column 26 of the firstly discharged receiving paper 7 can be read through this transparent window 73.

As described, the receiving paper 7 is folded into four. However, the number of folds can differ depending on the length of the received document 7, and in some cases, it is folded only into three.

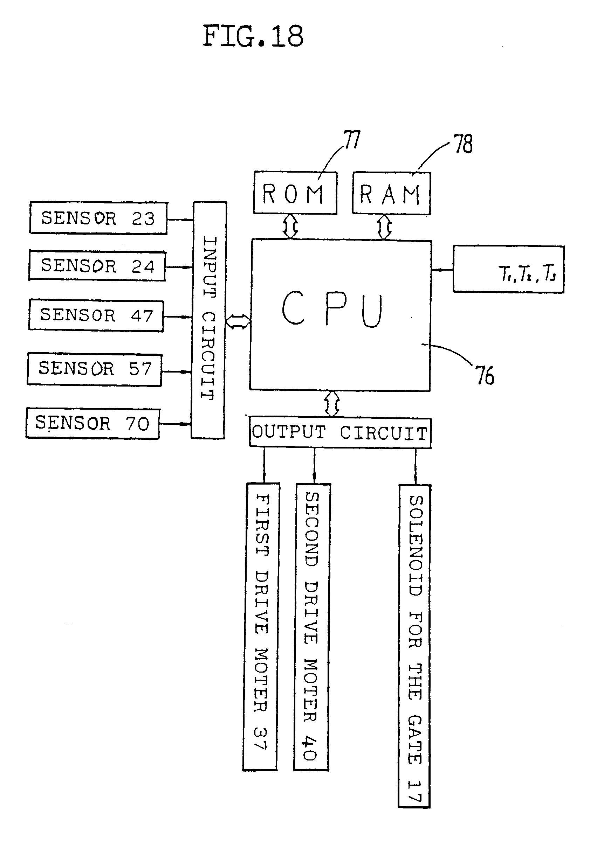

Fig. 18 shows a control arrangement to control the sealing device. A CPU (central processing unit) 76 performs various calculations and control functions, a ROM (read only memory) 77 stores the programme of the run procedure of the CPU 76, and a RAM (random access memory) 78 memorises various data. In the CPU 76, a detected signal from the sensors 23, 24, 47, 57 and 70 shown in the figure is input through the input circuit. The control signal of the CPU 76 is output to a solenoid to actuate the driving motors 37 and 40, the traction feeder 53 and the switching gate 17 through the output circuit. The CPU 76 has three timers T1, T2 and T3.

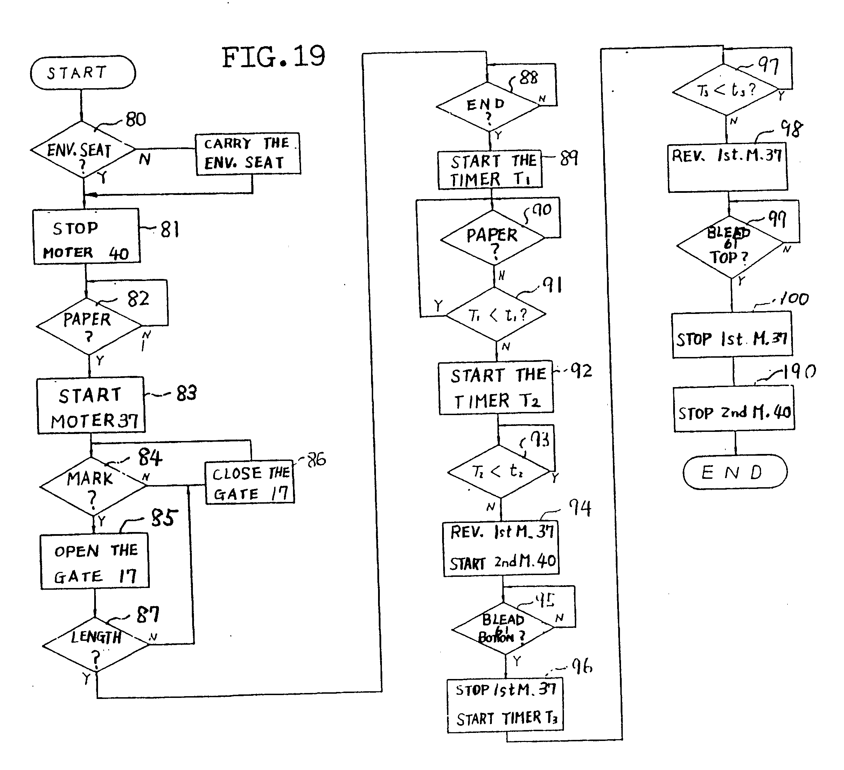

Fig. 19 is a flowchart showing the sequence of control by the control device. In the figure, 84, 85 and 86 are the steps to determine whether it is a confidential document or not. Step 87 determines whether the length of paper is sufficient or not and brings about discharge of paper of insufficient length (i.e. paper that does not meet the length of the folding guide 34). Steps 89, 90 and 91 determine whether the sending of one document is finished or not. In this respect, when the time T1 between the termination of the take-in of paper and the take-in of the succeeding paper equals or exceeds a specified time t1, it means that the sending of one document is finished. By considering when the interval between documents is longer than the time interval of one continuous document and setting the time t1 at at longer time (approximately 13 seconds in general) than the interval of one continuous document, the termiantion of one document is determined. This method of judgement of the end of one document may be replaced by the reception end signal from the facsimile apparatus.

In steps 92 and 93, a waiting time t2 is employed to obtain the timing for sealing. Steps 94 and onward concern actual sealing and cutting of the envelope paper. In these steps, the timer T3 is employed to stop the blade 61 at the bottom dead position for a specified time t3. As this is accomplished in a known manner, it is not described in detail.

The sealing device 1 can also perform a sorting operation, in which from a set of receiving papers 7 discharged from the facsimile receiver 2, the start and end of a series of documents are judged, and each is put into an envelope paper, so that plural documents addressed to different destinations are individually sealed for every addressee.

As the receiving paper is folded and sealed together with the envelope paper, and more particularly as the sealing means is passed between the pair of rollers providing the force for compression-bonding both ends of the envelope paper when folded double, then in contrast to conventional insertion into a ready-made envelope, errors such as omitting to insert into an envelope or inappropriate insertion never occur. Moreover, as the paper is not inserted in an envelope, or pasted in the size as it is, the size of the device is smaller, and the finishing is very neat. Furthermore, since the receiving paper is not just pasted as it is, the inconvenience that the description of the document might be read from the reverse side does not occur.

In addition, in the transportation of the receiving paper, since the receiving paper is transported in a slippable state in the step before it is cut off the receiver, no unnecessary load which might cause trouble to the receiver is exerted on the receiving paper. Moreover, by curving the transporting path, the entire device can be manufactured in a compact size, and as it is curved in the same direction as the roll of receiving paper, it serves to transport the receiving paper more smoothly.

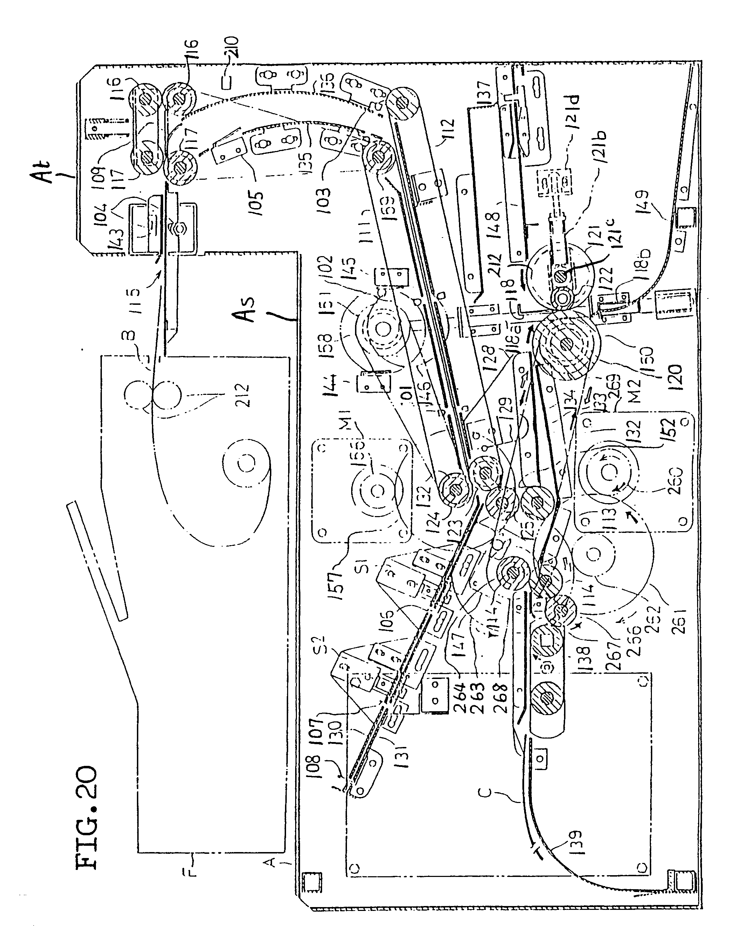

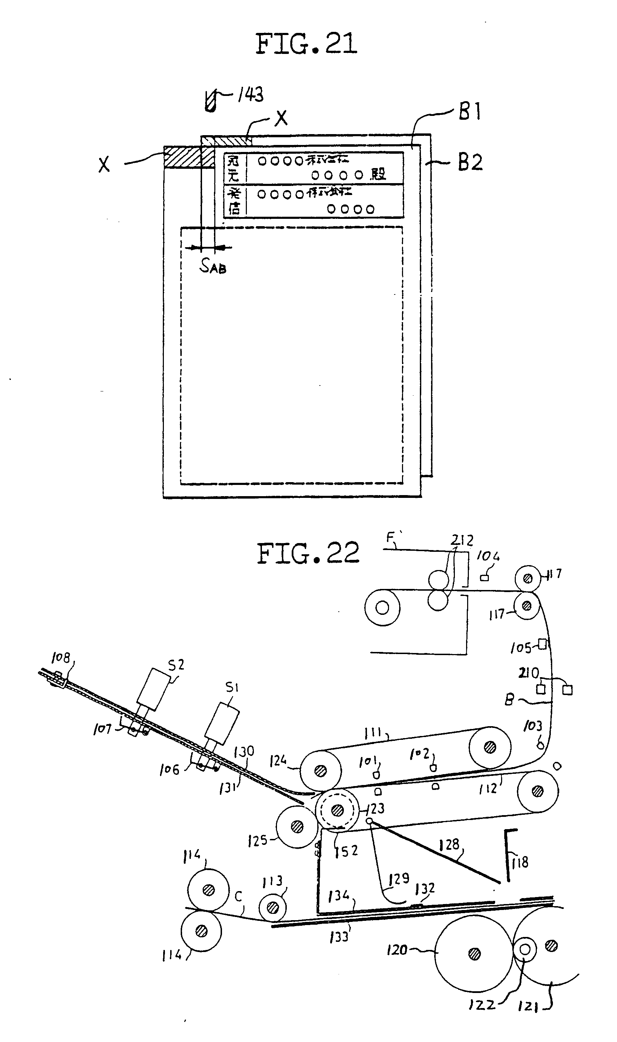

Fig. 20 is a side sectional view where a facsimile receiver F is placed on the shelf part AS of the upper surface of the housing (excluding the raised part At) of a sealing device A for facsimile receiving paper. The facsimile receiver F is a common type, and the receiving paper received by the facsimile receiver F is inserted through the receiving paper inlet 115 on the side surface of the raised part At. In the case of a document required to be sealed, the form of the sending document is distinguished in that in a specified place on the first sheet of the sending document, a discriminative pattern X indicating that it is a confidential document required to be sealed is printed as shown in Fig. 21.

The discriminative pattern X is detected by a discriminative sensor, namely a reflector type optical sensor 143 placed just behind the receiving paper inlet 115, and in the case of a confidential document required to be sealed, a switching gate 109 positioned between two pairs of upper and lower guide rollers 117, 117, 116 and 116 shown in Fig. 20 is switched to draw the receiving paper B into the sealing device.

Meanwhile, the relation between the discriminative pattern X of confidential documents shown in Fig. 21 and the discriminative sensor 143 will be described. For example, in the case of transmitting documents of A4 (210 mm x 297 mm) and B4 (257 mm x 364 mm) size, or similarly in the case of A5 (148 mm x 210 mm) and B5 (182 mm x 257 mm) size, the size of the discriminative pattern X is set widthwise so that the sealing device A can guarantee the detection of the discriminative pattern X by the discriminative sensor 143, even if the document is sent adjusted on the right or left edge, or at the centre. For example, in the embodiment in Fig. 21, the upper receiving document B1 of B4 size is received adjusted on the left edge, while the lower receiving document B2 of A5 size is received adjusted on the right edge with respect to the receiving paper B1, and a discriminative pattern X is printed on the receiving paper B1 and B2 on the left shoulder. In this example, the width of the discriminative pattern X of the receiving paper B1 and B2 will be set as that of the overlaying area SAB. By mounting a sensor which securely detects the discriminative pattern X on the discriminative sensor 143 to face the overlaying area SAB, even if the document is sent adjusted on the right or left edge, or at the centre, no more than two discriminative sensors 143 are required.

The receiving paper B, the path of which is changed by the switching gate 109, passes down between fixing guide plates 135 and 136 and is fed in a curved transportation path between an upper transporting belt 111 and a lower transporting belt 112.

In cases where the receiving paper B is of a roll type there is a remaining tendency for its leading edge to bend downwards so it is particularly smoothly transported downwards along the curved transportation path, and inconveniences such as paper jam near the switching gate 109 never occur.

An excess length sensor 105 is, in this embodiment, provided in a part of the fixing guide plate 135, and a pair of mutually facing receiving paper input sensors, namely transmission type optical sensors 104, are provided near the receiving paper inlet 115 across the path of the receiving paper.

Near the lower end of the fixing guide plates 135 and 136, a recording paper length sensor, in the form of a transmission type optical sensor 103, is mounted, and above and below the upper transporting belt 111 and the lower transporting belt 112, further recording paper length sensors in the form of further transmission type optical sensors 102 and 101 are provided.

The receiving paper B is transported, as shown in Fig. 22, on the lower transporting belt 112, and the upper transporting belt 111 gradually more closely approaches the lower transporting belt 112. A folding guide roller 124 which drives the lower end of the upper transporting belt 111 and a folding guide roller 123 which drives the lower end of the lower transporting belt 112 contact each other so as to pinch the receiving (recording) paper B. A further folding roller 125 contacts the folding guide roller 123 at a slightly lower level.

Upper and lower stopper guide plates 130 and 131 extend parallel so that the leading end of the recording paper B fed out from between the folding guide rollers 123 and 124 can be inserted therebetween.

Between these parallel upper and lower stopper guide plates 130 and 131 protruding middle length stoppers 106 and 107 and a maximum paper length stopper 108 are provided. Although the position of the maximum paper length stopper 108 is fixed, the middle length stoppers 106 and 107 are retractable by means of solenoids S1 and S2.

The leading edge of the recording paper B is pushed out by the folding guide rollers 123 and 124 and inserted between the stopper guide plates 130 and 131 until the leading edge contacts a stopper and further insertion is obstructed. When this happens the middle part of the recording paper B starts flexing in the region where it comes out of the folding guide rollers 123 and 124, and the flexing part is deflected between the folding guide rollers 123 and 125 so that the recording paper B is supplied onto a recording paper tray 134 in a doubled state.

The first folding mechanism of the device thus comprises the guide rollers 123, 124, the folding roller 125, the stopper guide plates 130 and 131, and the stoppers 106, 107 and 108.

To assist stacking of the folded recording paper B on the recording paper tray 134, recording paper pressers 129 and 128 hang from above and an anti-slip pad 132 is adhered to the upper surface of the recording paper tray 134.

Envelope paper C is supplied from outside the sealing device A along an envelope paper guide plate 139, and by way of a traction feeder 138, a specified length of paper is accurately fed in such that transportation pins are inserted through holes in the deckle edges of the envelope paper C.

The envelope paper C coming out of the traction feeder 138 passes through an envelope paper feed-in nip formed by rollers 114, one of which has an electromagnetic brake 147 (Fig. 20). Then it passes across an envelope paper guide plate 133, and above sealing folding rollers 120 and 121 and deckle edge compression-bonding rollers 122 (which lie closely adjacent the respective sides of the roller 121 and press in the direction of the roller 120) and reaches an envelope paper guide plate 148 with an envelope paper waiting sensor 137 mounted on it.

When folding of a series of receiving papers, as detected by the discriminative sensor 143 (Fig. 20), finishes, a blade 118 is pressed downward, and the stacked envelope paper C and the recording paper B are folded between sealing folding rollers 120 and 121. In this respect, the roller 121 is capable of moving backward against the bias of a pressure spring 121b (Fig. 20) according to the thickness of the envelope paper C and the recording paper B when they are folded together. The pressure spring 121b acts between the roller shaft 121c and a fixed part 121d of the sealing device A.

The second folding mechanism of the device comprises the aforementioned blade 118 and sealing folding rollers 120 and 121.

As shown in Fig. 33, the blade 118 is moved upward and downward by an eccentric cam ring 146, and the upper and lower dead points of the blade 118 are detected by blade position sensors 144 and 145 which are mounted on the circumference of an eccentric cam shaft 158 which is rotatably connected to the eccentric cam ring 146.

The envelope paper C and the recording paper B after being folded by the blade 118 and sealed by the sealing folding rollers 120 and 121 drops along a discharge guide plate 149.

Returning to Fig. 20, the first driving motor M1 drives the folding guide rollers 123 and 124 and the folding roller 125 as well as the eccentric cam ring 146 which moves the blade 118 upwards and downwards.

As a one-way clutch 151 is employed in the drive of the eccentric cam ring 146, the eccentric cam ring 146 does not rotate while the recording paper B is transported by the folding guide rollers 123 and 124. Conversely, when the eccentric cam ring 146 rotates, although the folding guide rollers 123 and 124 keep rotating, it has no effect as the recording paper B is not pinched.

The second driving motor M2 rotates clockwise and counterclockwise to drive the envelope paper feed-in roller 114 and the traction feeder 138, and during its counterclockwise rotation it also drives the sealing folding rollers 120 and 121. A one-way clutch 150 is employed in the drive of the sealing folding roller 120 so that the sealing folding rollers 120 and 121 do not rotate while the envelope feed-in roller 114 and the traction feeder 138 are driven.

When the sealing folding rollers 120 and 121 and the deckle edge compression-bonding roller 122 rotate and pull the envelope paper C through in order to simultaneously fold and seal the stacked envelope C and the recording paper B, as the envelope paper feed-in roller 114 is inactivated by the electromagnetic brake device 147, the envelope paper is quickly pulled from its slackened state and is automatically cut as it is tensioned by the perforated line becoming aligned with and impacting against a knife 113 which is located above the paper C between the envelope paper feed-in rollers 114 and the sealing folding rollers 120 and 121.

With reference to Fig. 22, the excess length sensor 105 is located between the pair of guide rollers 117 and the folding guide rollers 123 and 124, the transporting speed of which is faster than the feed-out speed of recording paper from the facsimile device F (Fig. 20).

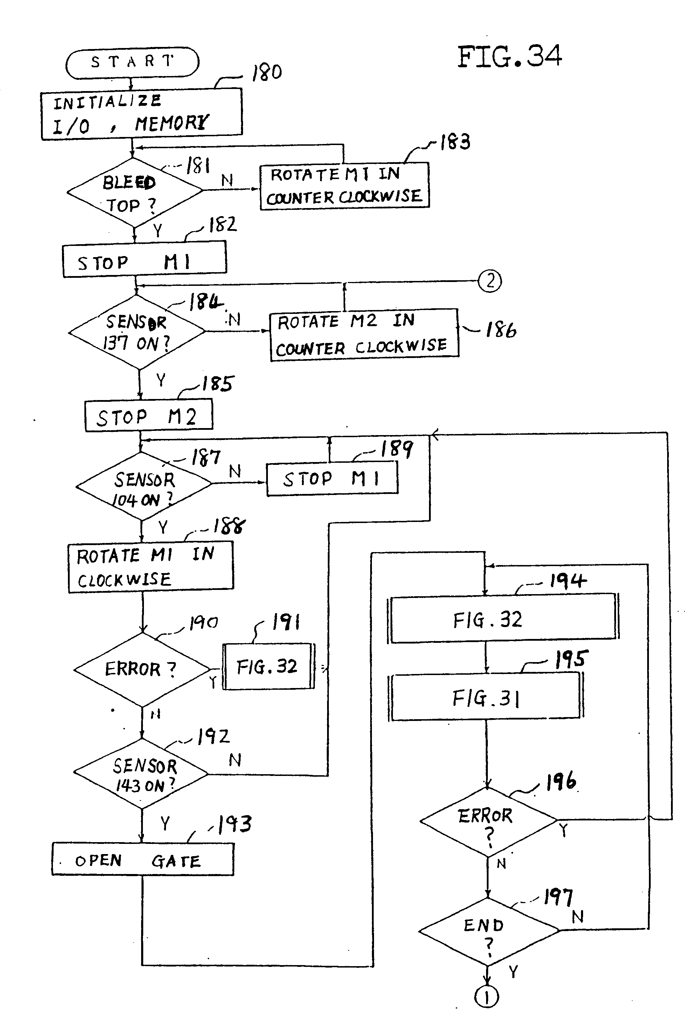

Whenever the recording paper B is of such excess length that the leading end of the paper is pinched by the folding guide rollers 123 and 124, it is pulled between the facsimile device F and the folding rollers 123 and 124 the excess length sensor 105 turns on and, as shown in Fig. 32, activates the control flowchart.

In step 170, when the excess length sensor 105 turns on, error checking proceeds as follows:-

1. When the excess length sensor 105 detects that the length of the recording paper B exceeds a specified length (i.e. when it is turned on) the first driving motor M1 is temporarily stopped, and then, if the excess length sensor 105 turns off again, the first motor M1 is rotated to feed in the recording paper B.

By such a continuous ON-OFF control, the recording paper B can be supplied into the sealing device A without creating an excessive tension caused by the difference in peripheral speed between the folding guide rollers 123 and 124, and a recording paper feed-out roller 212 in the facsimile device F. However, as recording paper B with an excess length is stacked in the sealing device A in such a state that it cannot be sealed, in the subsequent main routine, the sealing operation is, in error, not performed.

2. However, when the excess length sensor 5 is turned on, a cutter 210 (shown in Fig. 22) can be activated to cut the recording paper B being supplied into a length that it is possible to process for folding and sealing. In this way, the sealing device A can continuously take in the recording paper B, and the folding and sealing actions, after error processing, need not be prohibited.

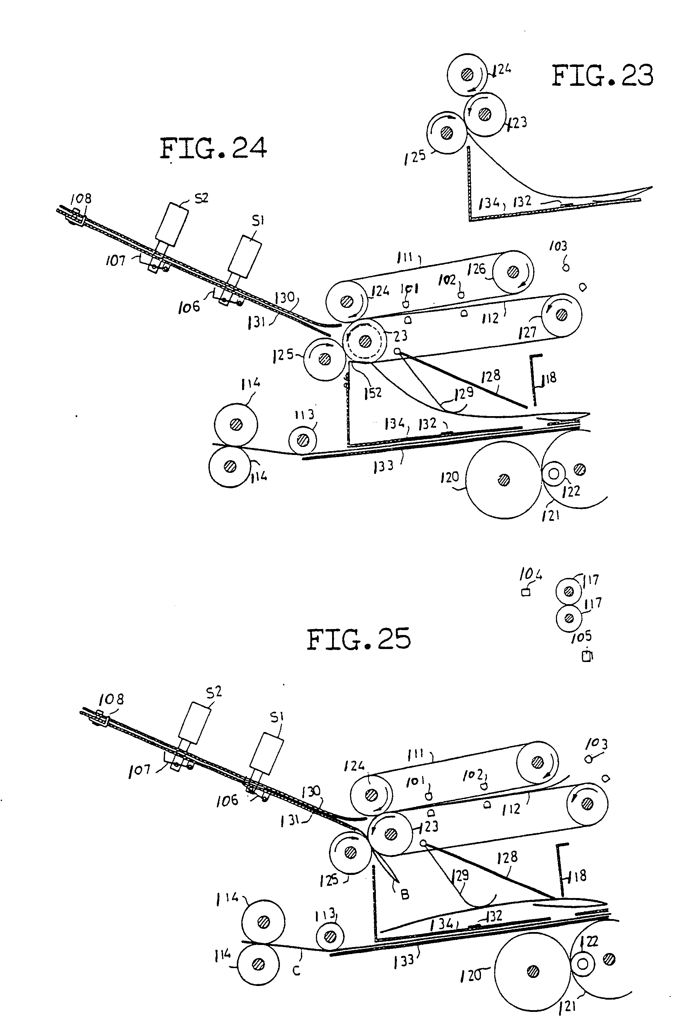

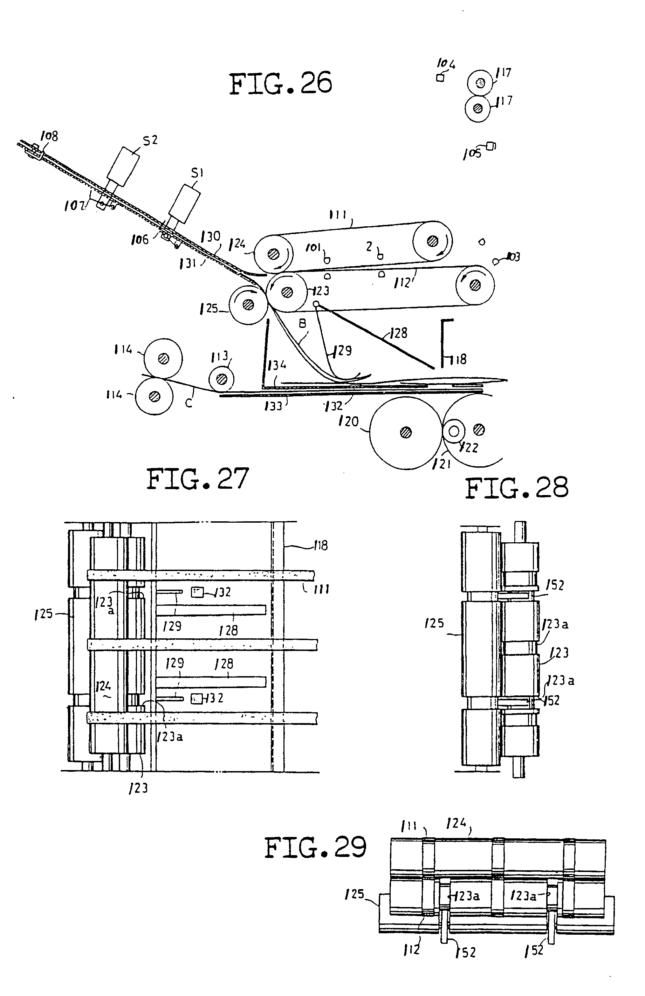

Referring now to Figs. 23 and 26, the folding of medium length paper will be described.

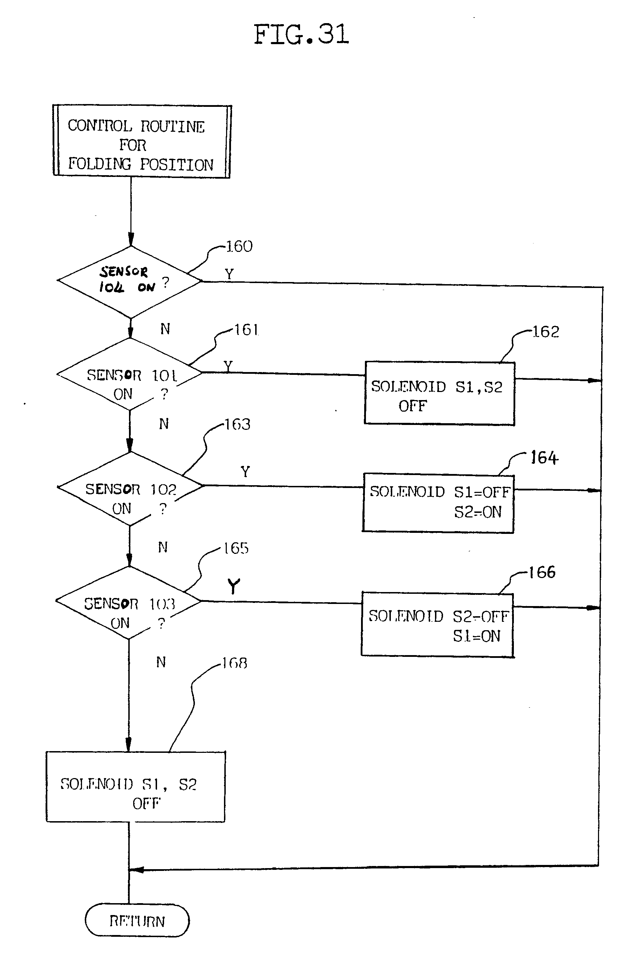

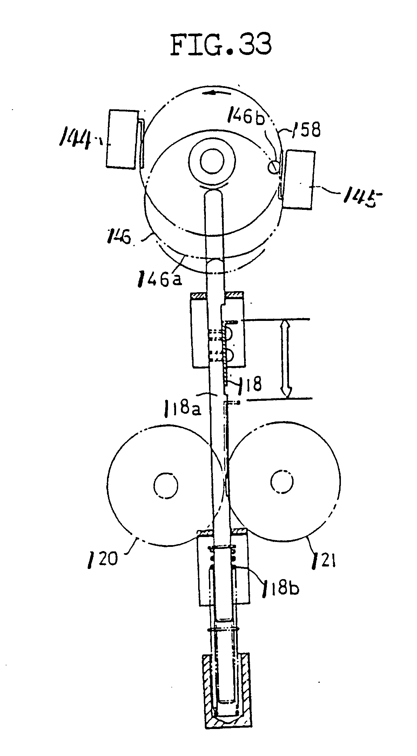

As shown in the control flowchart in Fig. 31, first, in the step 160, a recording paper input sensor 104 checks whether the end edge of the recording paper B is terminated. Then, when the recording paper input sensor 104 is OFF, which means that the end edge of the recording paper B is absent, succeedingly, in steps 161, 163 and 165, recording paper length sensor 101, 102 and 103 detect the position of the leading end of the recording paper B.

In step 161, when the recording paper length sensor 101 is switched ON, i.e. as the leading end of the recording paper B reaches the recording paper length sensor 101, the length of the recording paper must be approximately of B4, the maximum length workable in this embodiment, and since the leading end of the recording paper B is required to reach the maximum paper length stopper 108 in this case, as shown in step 162, solenoids S1 and S2 are not turned on and the middle length stoppers 106 and 107 do not come out.

In step 163, when the recording paper length sensor 101 is OFF, and the recording paper length sensor 102 is ON, the length of the recording paper must be approximately of A4 size and the middle length stopper 107 is required to come out to stop the paper at this point. Accordingly the solenoid S2 is turned on.

Successively, in step 165, when both of the recording paper length sensors 101 and 102 are OFF, while the recording paper length sensor 103 is ON the length of the paper is of B5, that is the minimum length workable in this embodiment, and the middle length stopper 106 is required to come out. Accordingly the solenoid S1 is turned on.

In step 167, when the recording paper input sensor 104 is in OFF state, while none of the recording paper length sensors 101, 102 and 103 is switch ON the length of the recording paper B is clearly shorter than the specified length, and the sealing device A is stopped to display an error indication, as it is an error (step 168).

Referring to Figs. 23 to 26, the recording paper pressers 128 and 129, and the slip stopper 132 will be described.

The recording paper sensors 101, 102 and 103 are employed to vary the folding place depending on the length of the recording paper B so that when a sheet of the recording paper B is folded, the upper folded part is always longer than the lower folded part.

By setting the upper part longer, as shown in Fig. 26, when the succeeding folded recording paper B is slidingly stacked there is no part for the paper to stick on.

However, since the leading end of the folded recording paper B remains curly as it has been once rolled, as shown in Fig. 25, it sometimes curves upward before the blade 118, without passing beneath the blade 118, and in order to prevent any such inconvenience, a recording paper presser 128 is suspended from above.

As shown in Fig. 26, when the following folded recording paper B is slid onto the previously stacked folded recording paper B on the recording paper tray 134, it sometimes pushes the previously recording paper B forward a little so that the previous paper is moved to such a position that the destination column of the recording paper B is dislocated from alignment with the window of the envelope paper C, or beyond the width of the envelope paper C disposed beneath it. The non-slip pad 132 is employed on the upper surface of the recording paper tray 134 in order to prevent the previous recording paper B from moving. Indeed, the recording paper presser 129 disposed above the anti-slip pad 132 presses the first folded receiving paper B into contact with the non-slip pad 132.

As shown in Figs. 22 and 24, a feed-out spring 152 extends from the upper end part of the recording paper tray 134, and this feed-out spring 152 projects into a groove 123a in the folding guide roller 123. Its function is to prevent the recording paper, once fed through the folding guide rollers 123 and 125, remaining near the folding guide rollers 123 and 125. Fig. 23 shows the terminal edge of the recording paper B remaining near the folding guide rollers 123 and 125, in the case where the feed-out spring 152 is not employed.

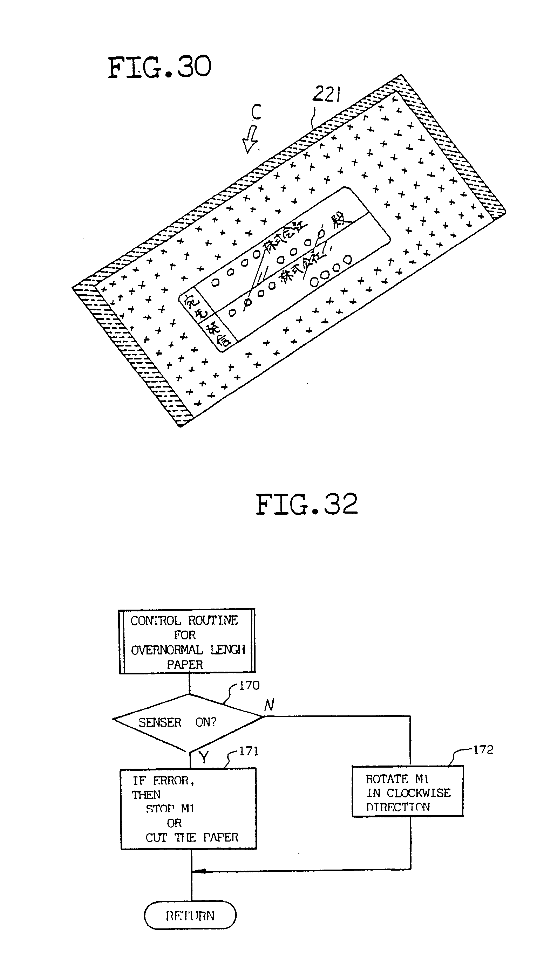

Fig. 30 is a perspective view of the envelope paper C in the sealed state. Around the outer edge of the envelope paper C in Fig. 30, there is a sizing margin 221 which is compression-bonded by the sealing folding rollers 120 and 121 and the deckle edge compression-bond roller 122.

As explained hereinbefore, as a medium length stopper (106 or 107) is employed between the folding guide rollers 123 to 125 and the maximum paper length stopper 108, and recording paper length sensors 101, 102, 103 are provided to detect the length of the recording paper, as well as drive for the medium length stopper dependent on the signal from the recording paper length sensor, even in cases where the length of each recording paper B received differs, the paper is still folded so that the upper folded part is longer so that other pieces of folded recording paper B subsequently fed to the tray 134 do not stick to the previously fed folded recording paper. In this respect, the subsequently fed recording paper B smoothly slides on top of the previous paper and creates a laminate or stack.

When the excess length sensor 105 detects that the recording paper has a length exceeding the specified length, the sealing device is caused to stop. This avoids any problem of recording paper B having a longer length than is sealable being taken into the device, being pinched between the recording paper feed-out exit roller 212 of the facsimile device F and the folding guide rollers 123 and 124 and being torn, with attendant risks that the message becomes illegible, or that an excessive load is created on the recording paper feed-out roller 212 in the facsimile device F or on the folding guide rollers 123 and 124 which might damage the facsimile device F or the sealing device A.

Since the recording paper presser 129, 128 is provided above the recording paper fed out onto the receiving tray 134 from the exit side of the folding guide rollers 123, 125 the superscription printed on the first folded recording paper B is prevented from dislocating from the superscription window of the envelope paper C, so the destination of the document does not become unknown after it is sealed.

Moreover, the presser 128, 129 also prevents the leading end of the folded recording paper B riding upward along the blade 118 without passing under the plaiting blade 118, and additionally prevent any underlying folded recording paper B being pushed out by the succeeding folded recording paper B to a point exceeding the range of the envelope paper C.

As shown in Fig. 20 and Figs. 36 to 38, in order to simultaneously fold and seal a laminate of the envelope paper C and the recording paper B by rolling of the sealing folding rollers 120 and 121, a one-way clutch 264 is provided which idles the envelope paper feed-in roller 114 when the envelope paper C is pulled. Therefore, when the sealing folding rollers 120 and 121 and the deckle edge compression-bond roller 122 (Fig. 20) rotate and pull the envelope paper C in a laminate, the envelope paper feed-in roller 121 is idled by the one-way clutch 264 and stopped by the electromagnetic brake device 147 (Fig. 20), and as the envelope paper C is stretched from a flexing state, the knife 113 cuts the envelope paper C along the perforated line.

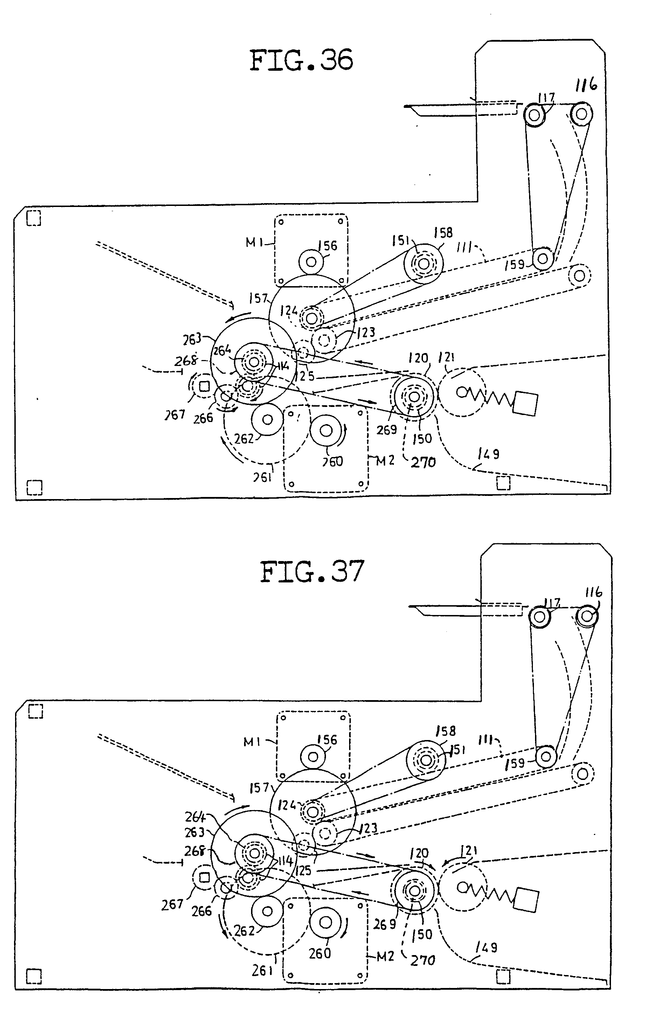

As shown in Figs. 36, 37 and 38, a gear 156 on the shaft of the first driving motor M1 engages with a gear 157 on the shaft of the folding guide roller 124 to drive the folding guide roller 124. The folding guide rollers 123 and 125 are driven by the folding guide roller 124 through respective further gears not shown in the figure. A pulley 159 is driven by the upper transporting belt 111 winding about the folding guide roller 124, and the guide rollers 116 and 117 in the take-in part are in turn driven by the pulley 159.

A pulley 158 on the driving shaft of the eccentric cam ring 146 is also driven by a pulley of the folding guide roller 124 by means of another belt. The pulley 158 rotates the eccentric cam ring 146 through a one-way clutch 151 and also moves the blade 118 upwards and downwards, but only when the first driving motor M1 rotates counterclockwise.

A gear 260 on the shaft of the second driving motor M2 engages with a gear 261, and a gear 262 with a smaller diameter on the shaft of the gear 261 engages with a gear 263 with a larger diameter on the driving shaft of the envelope paper feed-in roller 114. Between the gear 263 and the shaft of the envelope paper feed-in roller 114, the aforementioned one-way clutch 264 is employed. A counter-gear 266, revolved by another gear on the shaft of the envelope paper feed-in roller 114, drives a driving gear 267 of the traction feeder 138 (Fig. 20).

A pulley 269 on the shaft of the sealing folding roller 120 is driven by a pulley 268 united with the gear 263, and between the pulley 269 and the sealing folding roller 120, a one-way clutch 150 is provided.

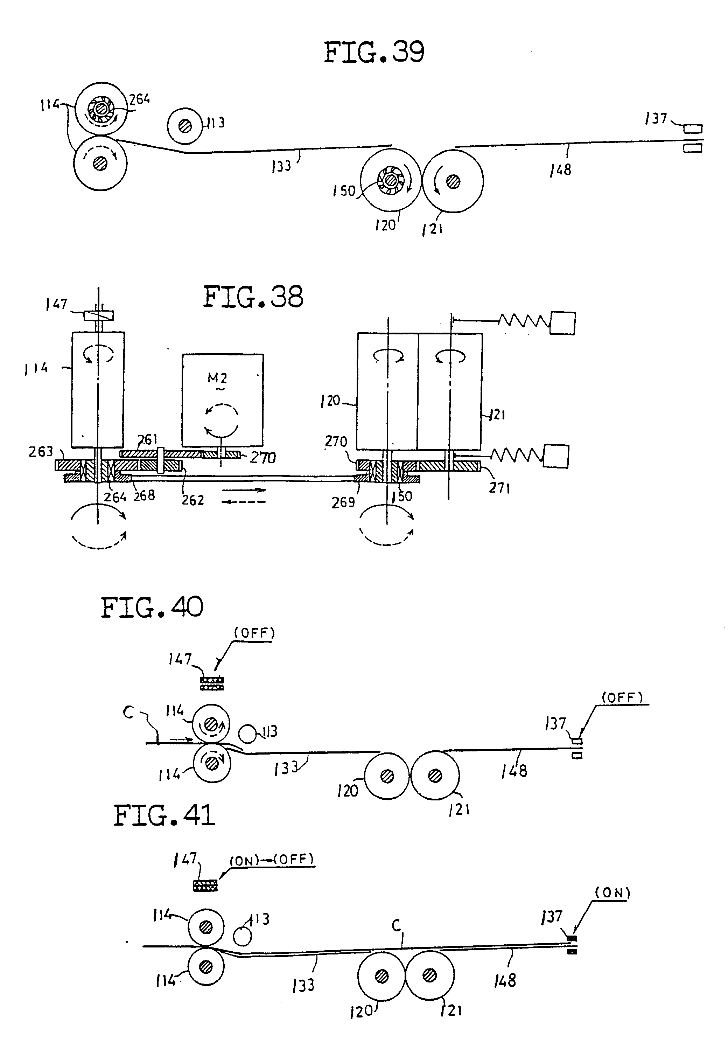

The pulley 269 is fixed in one unit with a further gear 270 which engages with a gear 271 on the shaft of the sealing folding roller 121 (Fig. 38).

The envelope paper feed-in roller 114 and the sealing folding rollers 120 and 121 are interlinked by virtue of their respective one way clutches 264, 150 so that when one of them is rotating, the other is stationary.

Therefore, as shown in Fig. 36, while the envelope paper feed-in roller 114 rotates to transport the envelope paper C, the sealing folding rollers 120 and 121 do not rotate, so there is no possibility of the sealed envelope on the discharge guide plate 149 being drawn in again. Conversely, as in Fig. 37, when the sealing folding rollers 120 and 121 rotate to enclose and seal, the envelope paper feed-in roller 114 is stopped by the electromagnetic brake device 147, the envelope paper C comes under tension, and the knife 113 severs it along the perforated line (see Figs. 39 to 44).

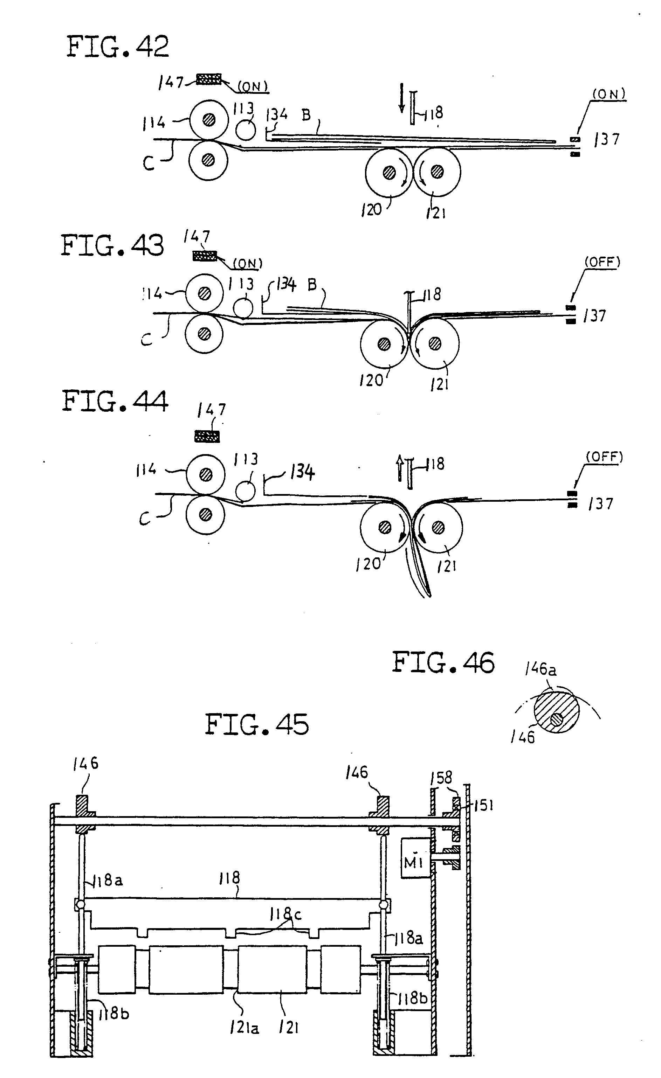

Figs. 40 and 41 illustrate supply of the envelope paper C. After the envelope paper C has been fed across guide plates 133 and 148 and its leading edge has actuated the sensor 137, the second driving motor M2 (Fig. 38) is rotated in reverse, and this results in the envelope paper feed-in roller 114 being idled by the one-way clutch 264 (Fig. 38) and simultaneously stopped (Figs. 42 to 43) by the electromagnetic brake device 147 (Fig. 38). In addition, when the second driving motor M2 is switched to reverse, the sealing folding rollers 120 and 121 which have been idled by the one-way clutch 150 (Fig. 38) start rotating, the envelope paper C gradually comes under tension as the blade 118 lowers, and as the perforated line comes into alignment under the knife 113, the knife 113 severs it (Fig. 44).

The blade 118 lowers nearly to the middle of the sealing folding rollers 120 and 121, and it returns upward after putting the folded envelope paper C and the recording paper B which is stacked thereon between the sealing folding rollers 120 and 121.

As an adhesive has been previously applied around the edges of the envelope paper C, the edges are adhered together, closing the recording paper B inside, when pressed by the deckle edge compression-bond rollers 122.

With reference to Fig. 45, the pulley 158, which is driven by the first driving motor M1 by way of the one-way clutch 151, drives the shaft of the eccentric cam ring 146. As shown in Fig. 46, the eccentric cam ring has a notch 146a in its circular cam which causes the folding blade 118 to stop momentarily at its lowest point.

The eccentric cam ring 146 at each side pushes down a rail 118a, which supports the blade 118, against the upward bias of a spring (helical spring) 118b, and in this way the blade 118 is pushed between the sealing folding rollers 120 and 121.

Projections 118c (Fig. 45) are formed on the blade 118, which projections 118c engage into corresponding circumferential grooves 121a formed in the surface of the sealing folding roller 121.

As shown in Fig. 33, the cam position detection switch 144 is actuated by a switch presser pin 146b to stop the blade 118 at its highest withdrawn position. The other switch 145 detects, in a similar manner, when the blade 118 is at its lowest position.

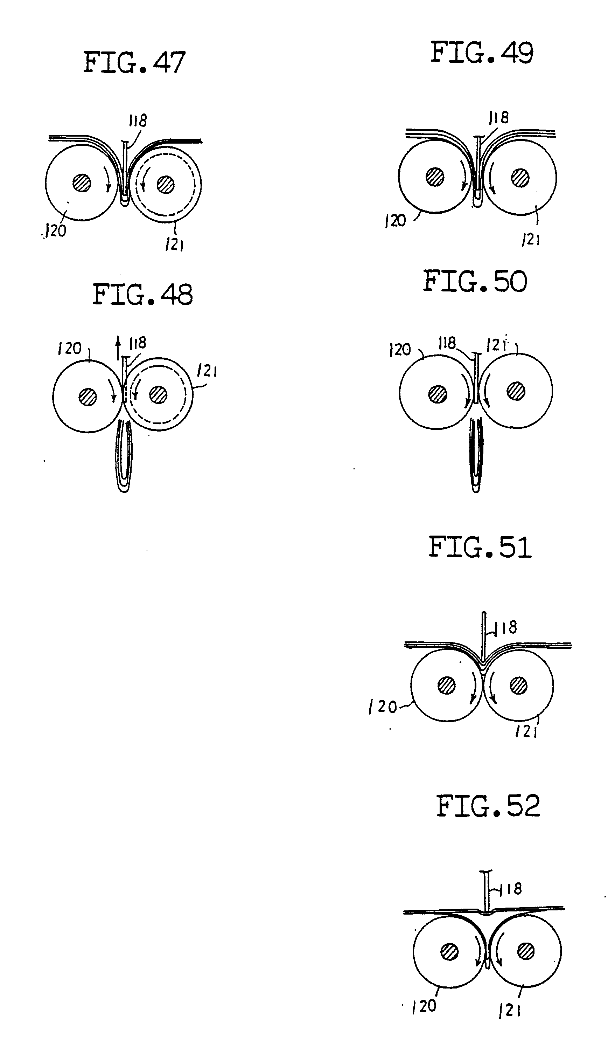

By providing circumferential grooves 121a in the sealing folding roller 121 and blade projections 118c for insertion therein, the blade 118 can be inserted right between the sealing folding rollers 120 and 121 without ever obstructing the rollers so that even in cases where the rollers 120, 121 start rotating and moving the recording paper B and the envelope paper C, the blade 118 is always reliably withdrawn (Figs. 47 and 48).

Without this provision, as shown in Figs. 49 and 50, if the blade 118 is pushed in until it is completely pinched between the sealing folding rollers 120 and 121, it may not return when the eccentric cam ring 146 goes back, which may cause malfunction of the sealing device as a whole.

On the other hand, as shown in Figs. 51 and 52, if the blade 118 is insufficiently lowered, then particularly in cases where the number of sheets of the recording paper B is large, the recording paper sheets near the top may spring back without being drawn in sufficiently, which will cause an error in sealing.

As described hereinabove, with the sealing device of the invention, the recording paper B and the envelope paper C are stacked in layers and mutually pressed and then pushed between a pair of sealing folding rollers by means of the blade. As the push-in speed of the blade and the speed of rotation of the sealing folding rollers are approximately equal, any risk that the upper part of the recording paper remains unfed due to an exceedingly high speed of rotation of the sealing fold rollers 120 and 121, and any risk that damage or tearing of the recording paper B may occur by the pushed force of the blade 118 caused by an exceedingly high speed of the blade 118, is minimised.

The blade is arranged to stop momentarily at its lowest position so that the laminate of the recording paper B and the envelope paper C are held down for a sufficient length of time to be taken in between the sealing folding rollers 120 and 121, so that any risk that the upper pieces of the stacked recording paper B remaining unfed is miminised. The provision of the circumferential groove in one of the sealing folding rollers, and the corresponding projections on the blade further contribute to avoiding this risk yet at the same time avoid the trapping of the blade 118 between the rollers.

Use of the opposite directions of rotation of the driving motor to drive the envelope paper feed-in roller and to drive the sealing folding rollers (by using a one-way clutch arrangement) means that only a single motor is required, whereas conventionally, plural motors have been used in order to drive sealing folding rollers on the one hand and an envelope paper feed-in roller on the other hand.

## Claims

1. A sealing device for facsimile receiving paper comprising means (8) for taking in the receiving paper (7; B) discharged from a facsimile receiver (2; F) first folding means (31, 35, 36, 42, 46; 111, 112, 130, 131, 124, 125) for folding the receiving paper taken in by the means, second folding means (56, 61; 133, 148, 118) for simultaneously folding a laminate of the folded receiving paper (7) and envelope paper (52; C) and sealing means (58, 59; 120, 121, 122) for sealing the receiving paper by adhering the edges of the envelope paper.

2. A sealing device according to claim 1, wherein the facsimile receiver (2; F) is provided internally with wound receiving paper (7; B) in a rolled state, and characterised in that a housing (6; A) forming the outer frame of the sealing device has a part (3; As) of its upper surface constituing a shelf part on which the facsimile receiver is mounted and a raised part (4; At) extending upward and provided with an inlet (5; 115) facing towards the receiving paper outlet of the facsimile receiver so as to take in the receiving paper (7; B) discharged therefrom, in that a feed-out mechanism (8) is arranged inside the raised part adjacent to the inlet to feed the receiving paper taken in through the inlet along a transportion path which is curved below the roll in the same direction as the winding direction of the roll.

3. A sealing device according to claim 1 or 2 wherein the first folding means comprises folding guide rollers (123, 124, 125) and a maximum paper length stop (108) and one or more middle length stops (106, 107) disposed between the folding guide rollers and the maximum paper length stop, and wherein at least one receiving paper length sensor (101, 102, 103) detecting the length of the receiving paper (B) is disposed in the transportation path for the receiving paper, and means (51, 52) for driving the middle length stop according to the signal from the receiving paper length sensor are provided (Fig. 20).

4. A sealing device according to claim 3, wherein a receiving paper tray (134) is disposed in the direction of sending out of the receiving paper of the folding guide rollers (124, 125) of the first folding means, and in the case where the receiving paper (B) is placed in a folded state on the receiving paper tray, the upper folded side is longer than the lower folded side (Figs. 24 to 26).

5. A sealing device according to any preceding claim wherein the second folding means comprises a pair of rollers (58; 120, 121) which operate to fold the envelope paper in double in such a manner that the receiving paper lying on the envelope paper comes inside, and wherein the sealing means comprises means (71, 121b) for applying a pressure to enable mutual compression-bonding between the aforementioned pair of rollers (58; 120, 121) at both ends in the folding direction of the envelpe paper and further pressure-connection rollers (59; 122) closely contacting respective sides of one of the pair of rollers and compression-bonding both edges of the folded part of the envelope paper C by pressure towards the other one of the pair of rollers.

6. A sealing device according to any preceding claim wherein the second folding means comprises a pair of sealing folding rollers (58; 120, 121) rotating in mutual pressure contact and a blade (61; 118) operative to push the layered receiving paper (7; B) and the envelope paper (52; C) in between these rollers, the speed of the blade and the rotating speed of the sealing folding rollers being set approximately equal.

7. A sealing device according to claim 6, wherein the blade (61; 118) is arranged so as temporarily to stop at its lowest position.

8. A sealing device according to any preceding claim wherein the second folding means comprises a pair of sealing folding rollers (120; 121) rotating in mutual pressure contact and a blade (118) operative to push the receiving paper stacked in layers upon the envelope paper in between the rollers, and wherein a circumferential groove (121a) is formed in at least one of the sealing folding rollers (121) and a corresponding projection (118c) for engagement therein is formed in the blade (118) (Fig. 45).

9. A sealing device according to any preceding claim wherein the second folding means comprises a pair of sealing folding rollers (58; 120, 121) rotating in mutual pressure contact and a blade (61; 118) operative to push the receiving paper stacked in layers upon the envelope paper in between the rollers, and wherein a cutter knife (55; 113) for the envelope paper (52; C) is located above the surface of that part of the envelope paper which extends between an envelope paper exit and the sealing folding rollers (120, 121) in a tensile state or in a slack state, such that the surface of the paper impacts on the blade when the paper is in a tensile state.

10. A sealing device according to any preceding claim wherein the second folding means comprises a pair of sealing folding rollers (120, 121) rotating in mutual pressure contact and a blade (118) operative to push the receiving paper stacked on the envelope paper in between the rollers, and wherein an electromagnetic brake device (147) is provided for the envelope paper feed-in rollers (114) which transport the envelope paper (C) towards the sealing folding rollers (120, 121), the electromagnetic brake device (147) being operable simultaneously with the downward movement of the blade (118) so that the envelope paper is then brought under tension (Figs. 40 to 44).

11. A sealing device according to claim 10 wherein a one-way clutch (150) is employed on the driving shaft of one of the sealing folding rollers (121) so that the sealing folding rollers (120, 121) are driven by the driving motor (M2) driving the envelope paper feed-in roller (114), but only when said motor operates in reverse.

# FIG. 1

# FIG. 2

# FIG.5

# FIG. 3

# FIG. 4

# FIG. 6

# FIG. 7

# FIG. 8

## FIG. 9

## FIG.10

FIG.11

FIG.12

FIG.13

# FIG.14

# FIG.15

# FIG.16

# FIG.17

# FIG.18

ROM 77

RAM 78

SENSOR 23

SENSOR 24

SENSOR 47

SENSOR 57

SENSOR 70

INPUT CIRCUIT

CPU

76

$T_1, T_2, T_3$

OUTPUT CIRCUIT

FIRST DRIVE MOTER 37

SECOND DRIVE MOTER 40

SOLENOID FOR THE GATE 17

FIG.19

EP 0 378 912 A2

# FIG.20

EP 0 378 912 A2

# FIG.21

# FIG.22

FIG.23

FIG.24

FIG.25

FIG.26

FIG.27

FIG.28

FIG.29

# FIG.30

# FIG.32

CONTROL ROUTINE
FOR
OVERNORMAL LENGH
PAPER

170

SENSER ON?

N

Y 171

IF ERROR,
THEN
STOP M1
OR
CUT THE PAPER

172

ROTATE M1
IN CLOCKWISE
DIRECTION

RETURN

# FIG.31

```
┌─────────────────────┐
│ CONTROL ROUTINE     │
│ FOR                 │
│ FOLDING POSITION    │
└─────────────────────┘
           │
           ▼
      ╱─────────╲  ─160
     ╱ SENSOR    ╲      Y
    ╱  104  ON ?   ╲───────────────────────────────────────┐
     ╲            ╱                                         │
      ╲─────────╱                                          │
           │ N        ─161                    ─162         │
           ▼                                               │
      ╱─────────╲                   ┌──────────────────┐   │
     ╱ SENSOR 101╲       Y          │ SOLENOID S1,S2   │   │
    ╱    ON    ?   ╲───────────────►│ OFF              │───┤
     ╲            ╱                 └──────────────────┘   │
      ╲─────────╱                                          │
           │ N        ─163                    ─164         │
           ▼                                               │
      ╱─────────╲                   ┌──────────────────┐   │
     ╱ SENSOR 102╲       Y          │ SOLENOID S1=OFF  │   │
    ╱    ON    ?   ╲───────────────►│ S2=ON            │───┤
     ╲            ╱                 └──────────────────┘   │
      ╲─────────╱                                          │
           │ N        ─165                    ─166         │
           ▼                                               │
      ╱─────────╲                   ┌──────────────────┐   │
     ╱ SENSOR 103╲       Y          │ SOLENOID S2=OFF  │   │
    ╱    ON    ?   ╲───────────────►│ S1=ON            │───┤
     ╲            ╱                 └──────────────────┘   │
      ╲─────────╱                                          │
           │ N        ─168                                 │
           ▼                                               │
  ┌──────────────────┐                                     │
  │ SOLENOID S1, S2  │                                     │
  │ OFF              │                                     │
  └──────────────────┘                                     │
           │                                               │
           ◄───────────────────────────────────────────────┘
           │
           ▼
     ╭───────────╮
     │  RETURN   │
     ╰───────────╯
```

## FIG.33

FIG.34

FIG.35

①

```
          ┌─────────────┐ 200
          │  STOP   M1  │
          └─────────────┘
                 │
          ┌─────────────┐ 201
          │  CLOSE  GATE │
          └─────────────┘
                 │
          ┌──────────────────┐ 202
          │  ROTATE  M2  IN  │
          │ COUNTER CLOCKWISE │
          └──────────────────┘
                 │
          ┌──────────────────┐ 203
          │  ROTATE  M1  IN  │
          │ COUNTER CLOCKWISE │
          └──────────────────┘
                 │
                 ▼
            ╱╲  204       ┌───── N
          ╱ BLEED ╲───────┘
          ╲ BOTTOM? ╱
            ╲  ╱
             Y
             ▼
            ╱╲  205       ┌───── N
          ╱ BLEED ╲───────┘
          ╲ TOP ? ╱
            ╲  ╱
             │
             Y
             ▼
          ┌─────────────┐ 206
          │  STOP   M1  │
          └─────────────┘
             │
             ▼
            ╱╲  207       ┌───── N
          ╱ END ╲─────────┘
          ╲  ?  ╱
            ╲  ╱
             Y
             ▼
          ┌─────────────┐ 208
          │  STOP   M2  │
          └─────────────┘
                 │
                 ▼
                 ②
```

FIG.36

FIG.37

# FIG.39

# FIG.38

# FIG.40

# FIG.41

FIG. 42

147 (ON)

114   113   134  B   118   (ON)

C   120   121   137

FIG. 43

147 (ON)

114   113   134  B   118   (OFF)

C   120   121   137

FIG. 44

147

114   113   134   118   (OFF)

C   120   121   137

FIG. 46

146a

146

FIG. 45

146   146   158   151

MI

118a   118   118c   118a

118b   118b

121a   121

FIG.47

FIG.49

FIG.48

FIG.50

FIG.51

FIG.52